# FASCICULE DE BREVET EUROPEEN

(11) **EP 2 961 998 B1**
(45) Date de publication et mention de la délivrance du brevet: **29.03.2017**
(21) Numéro de dépôt: 14706885.2
(22) Date de dépôt: 04.02.2014
(51) Int. Cl.: F16B 5/06, B60K 11/08

(54) **ASSEMBLAGE D'UNE LEVRE MINCE ALLONGEE DANS UNE FENTE ETROITE ALLONGEE ET APPLICATION A L'ASSEMBLAGE D'UN GUIDE-AIR SUR UNE BUSE**
ANORDNUNG EINES LÄNGLICHEN DÜNNEN LIPPE IN EINEM LÄNGLICHEN ENGER SCHLITZ UND VERWENDUNG ZUR MONTAGE EINER LUFTFÜHRUNG AUF EINER ZARGE
ASSEMBLY OF AN ELONGATE THIN LIP IN AN ELONGATE NARROW SLIT AND USE FOR ASSEMBLING AN AIR GUIDE ONTO A SHROUD

(30) Priorité: 26.02.2013 FR 1351705
(43) Date de publication de la demande: 06.01.2016
(73) Titulaire: Renault s.a.s, 92100 Boulogne-Billancourt (FR)
(72) Inventeur: BUI, Joseph, F-78130 Les Mureaux (FR)
(86) Numéro de dépôt international: PCT/FR2014/050206
(87) Numéro de publication internationale: WO 2014/131957

(56) Documents cités:
- DE-U1- 8 910 424
- FR-A1- 2 816 378

## Description

La présente invention concerne l'assemblage d'une lèvre allongée relativement mince dans une fente allongée relativement étroite, et son application à l'assemblage d'un guide-air sur une buse.

Dans un certains nombre d'applications, il est nécessaire d'emboîter un élément dans un autre, le premier élément présentant au moins une paroi se terminant par une lèvre ou lame allongée relativement mince qui doit être étroitement reçue dans une fente allongée formée dans le second élément. C'est le cas par exemple dans le domaine de la construction automobile lorsqu'il s'agit de venir emboîter sur une buse de groupe moto-ventilateur les parois haute et basse d'un guide d'air ; la buse comprend en partie haute et basse des parois parallèles horizontales sur lesquelles des plaques parallèles rattachées par un grand côté à la paroi forment des fentes allongées de faible épaisseur ouvertes sur trois côtés ; le guide d'air comprend en partie haute et basse deux lèvres allongée à bords rectilignes qui doivent s'introduire dans les fentes parallèles étroites de la buse ; à la suite de cet emboîtement, le guide d'air est finalement fixé sur la buse grâce à des éléments de clipsage complémentaires appropriés. L'introduction d'une pièce dans l'autre s'avère assez difficile pour le monteur du fait que le guide d'air est une pièce relativement grande et souple qui donc se déforme lorsqu'on la manipule et il n'est donc pas aisé de mettre correctement en correspondance les zones à clipser.

Un assemblage selon le préambule de la revendication 1 est connu du document FR 2 816 378 A.

Le but de l'invention est de proposer un assemblage d'une lèvre allongée relativement mince dans une fente allongée à trois côtés, relativement étroite, pour lequel l'introduction d'un élément dans l'autre est facilitée.

L'invention atteint son but grâce à un assemblage d'un premier élément avec un second élément, réalisé par l'assemblage d'une lèvre mince allongée appartenant au second élément dans une fente étroite allongée formée par les trois côtés d'une plaque plane allongée fixée parallèle à une paroi plane du premier élément, caractérisé en ce que la lèvre mince allongée a, en direction du premier élément, un bord concave et se termine latéralement par des pointes avancées, et en ce que la fente allongée comporte latéralement deux zones où l'épaisseur de fente est augmentée, agencées pour coopérer avec les pointes avancées du bord pour que l'introduction de la lèvre dans la fente commence par l'introduction des pointes dans lesdites zones et se poursuive ensuite lors de l'avancée de la lèvre par l'introduction progressive du reste du bord concave de la lèvre.

Avantageusement, chaque zone de fente à épaisseur augmentée est formée par une partie extérieurement cornée des angles de la plaque formant la fente, de sorte que cette partie cornée sert de guide progressif aux pointes avancées du bord de la lèvre mince lors de l'introduction de la lèvre dans la fente.

Avantageusement, le bord concave est curviligne, c'est-à-dire qu'il est en forme d'arc de cercle ou d'ellipse ou d'une courbe approchante.

Avantageusement, l'assemblage du premier élément avec le second élément est réalisé par l'assemblage de deux lèvres du second élément dans deux fentes allongées formées sur deux parois parallèles opposées du premier élément.

Selon une application préférée, l'assemblage est l'assemblage d'un guide d'air sur une buse de ventilateur dans un véhicule automobile.

D'autres caractéristiques et avantages de l'invention ressortiront de la description suivante d'un exemple de réalisation. Il sera fait référence aux dessins annexés sur lesquels :
La figure 1 est une vue en perspective de trois-quarts arrière d'une buse de ventilateur et d'un guide d'air assemblé avec la buse, par emboîtement.
Les figures 2 et 3 sont des vues de détail en perspective de trois-quarts avant de la partie haute de la buse et du guide d'air de la figure 1, respectivement en position d'approche et en position d'emboîtement.
Les figures 4 et 5 sont des vues de détail en perspective de dessous et d'avant de la partie basse de la buse et du guide d'air de la figure 1, respectivement en position d'approche et en position d'emboîtement.

L'assemblage selon l'invention vise à emboîter un guide d'air 1 (second élément) sur la buse 2 (premier élément) d'un groupe moto-ventilateur 3.

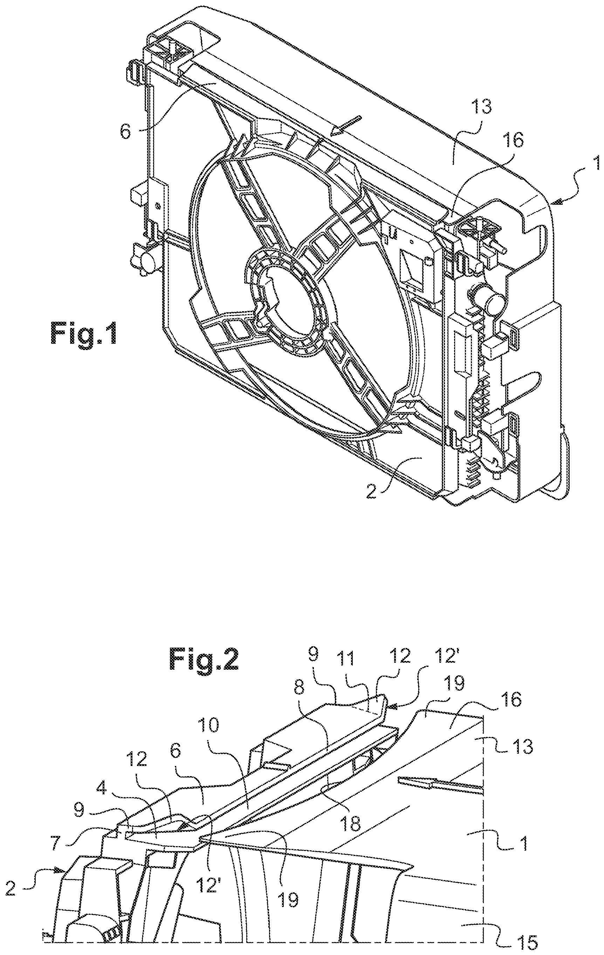

La buse 2 se présente sous la forme d'un cadre rigide rectangulaire présentant deux parois horizontales respectivement haute 4 et basse 5 (figures 2-4). Sur la paroi haute 4, une plaque rectangulaire allongée parallèle 6 s'attache à la paroi 4 par un pied de rattachement 7 le long du grand côté de la plaque 6 ; les trois autres côtés de la plaque 6 (un autre grand côté 8 et deux petits côtés 9) forment les bords ouverts d'une fente horizontale 10 ouverte vers l'avant (c'est-à-dire vers le guide d'air 1) et latéralement. Selon l'invention, les coins avant 12 de la plaque 6 sont « cornés », c'est-à-dire relevés vers le haut le long d'une « pliure » 11 disposée diagonalement. On voit donc que la fente horizontale 10 a une épaisseur sensiblement constante sur toute son étendue, sauf dans les zones 12' formées par ces coins 12 où l'épaisseur de la fente s'accroît en direction de l'angle.

Le guide d'air 1 est sous forme d'un cadre rectangulaire comportant essentiellement des parois horizontales haute 13 et basse 14 reliées par des côtés verticaux 15. Les parois horizontales 13 et 14 se terminent vers l'arrière par une lèvre arrière respective 16 et 17, dirigée vers la buse 2, et qui doit s'insérer relativement étroitement dans les fentes respectives de ladite buse 2. Selon l'invention, la lèvre arrière 16 est curviligne et concave vers l'arrière, de sorte qu'elle forme, en direction de la buse 2, un bord 18 en arc d'ellipse se terminant latéralement par deux pointes latérales avancées 19. Lorsqu'on présente l'un devant l'autre le guide d'air 1 et la buse 2 (figure 2), le monteur vient placer les pointes 19 du bord curviligne 18 en face des zones d'épaisseur augmentée formées par les coins relevés 12, ce qui est assez facile, de sorte qu'en continuant le mouvement d'approche d'un élément vers l'autre, ces pointes 19 peuvent venir porter contre la surface inférieure desdits coins relevés 12 et être guidées progressivement par ladite surface vers les zones d'épaisseur nominale de la fente 10. Dans le même temps, la forme curviligne du bord 18 permet au reste de la lèvre 16 d'avancer sans difficulté, progressivement, pour s'introduire dans la fente 10.

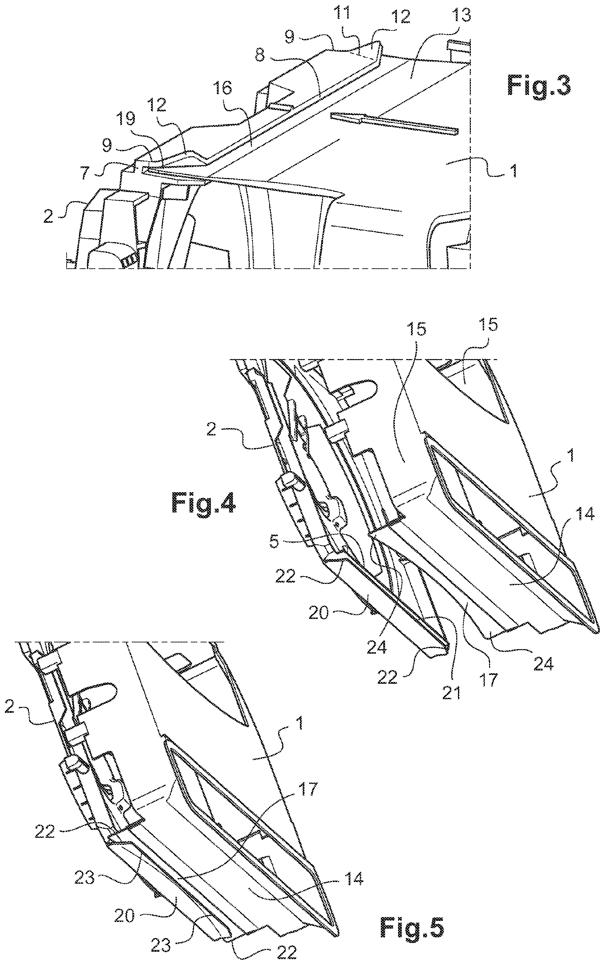

Les mêmes dispositions sont prises pour les parties basses des deux éléments, comme on le voit sur les figures 4 et 5. On y retrouve sous la paroi horizontale inférieure 5 de la buse, une plaque 20 définissant une fente horizontale 21 ouverte sur trois côtés et destinée à recevoir la lèvre arrière basse 17 du guide d'air 1. La plaque comporte encore deux coins relevés 22 qui peuvent avoir une forme différente de celle des coins relevés de la plaque supérieure 6. Dans l'exemple de réalisation représenté sur les figures 4 et 5, les coins 22 sont assez fortement relevés à leurs extrémités latérales, mais se prolongent vers le milieu de la plaque par un relèvement progressif 23. Le principe d'introduction de la lèvre 17 dans la fente 21 est cependant totalement identique à ce qui a été vu pour la partie haute du dispositif : les pointes latérales 24 commencent d'abord à s'introduire dans les parties de fente d'épaisseur augmentée, au niveau des coins relevés 22, jusqu'à ce que finalement la lèvre 17 soit introduite dans la fente 21 sur toute sa largeur.

L'introduction de la lèvre haute 16 dans la fente 10 et de la lèvre basse 17 dans la fente 21 se fait de préférence simultanément, et ce, jusqu'à ce que des clips de verrouillage non représentés verrouillent le premier élément 2 dans le second élément 1. Il est prévu que dans cette position de verrouillage, le bord 18 de la lèvre haute 16 ne soit pas au contact du fond de la zone réceptrice formée par la fente 10, et il en est de même au niveau de la partie basse du dispositif.

## Revendications

1. Assemblage d'un premier élément (2) avec un second élément (1), réalisé par l'assemblage d'une lèvre mince allongée (16) appartenant au second élément (1) dans une fente étroite allongée (10) formée par les trois côtés d'une plaque plane allongée (6) fixée parallèlement à une paroi plane (4) du premier élément (2), **caractérisé en ce que** la lèvre mince allongée (16) a, en direction du premier élément, un bord concave (18) et se termine latéralement par des pointes avancées (19), et **en ce que** la fente allongée (10) comporte latéralement deux zones (12') où l'épaisseur de fente est augmentée, agencées pour coopérer avec les pointes avancées (19) de la lèvre (16) pour que l'introduction de la lèvre (16) dans la fente (10) commence par l'introduction des pointes (19) dans lesdites zones (12') et se poursuive ensuite lors de l'avancée de la lèvre (16) par l'introduction progressive du reste du bord concave (18) de la lèvre (16).

2. Assemblage selon la revendication 1, **caractérisé en ce que** chaque zone (12') de fente à épaisseur augmentée est formée par une partie extérieurement cornée (12) des angles de la plaque (6) formant la fente (10).

3. Assemblage selon la revendication 1 ou 2, **caractérisé en ce que** le bord concave (18) est curviligne.

4. Assemblage selon l'une quelconque des revendications 1 à 3, **caractérisé en ce qu'**il est réalisé par l'assemblage de deux lèvres (16, 17) du second élément (1) dans deux fentes allongées (10, 21) formées sur deux parois parallèles opposées (4, 5) du premier élément (2).

5. Assemblage selon l'une quelconque des revendications 1 à 4, **caractérisé en ce qu'**il s'agit de l'assemblage d'un guide d'air (1) sur une buse de ventilateur (2) dans un véhicule automobile.

## Patentansprüche

1. Anordnung eines ersten Elements (2) mit einem zweiten Element (1), die durch das Anordnen einer zum zweiten Element (1) gehörenden länglichen dünnen Lippe (16) in einem länglichen schmalen Schlitz (10) hergestellt wird, der von den drei Seiten einer länglichen ebenen Platte (6) gebildet wird, die parallel zu einer ebenen Wand (4) des ersten Elements (2) befestigt ist, **dadurch gekennzeichnet, dass** die längliche dünne Lippe (16) in Richtung des ersten Elements einen konkaven Rand (18) hat und seitlich in vorstehenden Spitzen (19) endet, und dass der längliche Schlitz (10) seitlich zwei Zonen (12') aufweist, in denen die Schlitzdicke erhöht ist, die eingerichtet sind, um mit den vorstehenden Spitzen (19) der Lippe (16) zusammenzuwirken, damit die Einführung der Lippe (16) in den Schlitz (10) durch die Einführung der Spitzen (19) in die Zonen (12') beginnt und sich anschließend beim Vorschub der Lippe (16) durch die progressive Einführung des Rests des konkaven Rands (18) der Lippe (16) fortsetzt.

2. Anordnung nach Anspruch 1, **dadurch gekennzeichnet, dass** jede Schlitzzone (12') mit erhöhter Dicke von einem außen hornförmigen Teil (12) der Ecken der den Schlitz (10) bildenden Platte (6) gebildet wird.

3. Anordnung nach Anspruch 1 oder 2, **dadurch gekennzeichnet, dass** der konkave Rand (18) krummlinig ist.

4. Anordnung nach einem der Ansprüche 1 bis 3, **dadurch gekennzeichnet, dass** sie durch das Anordnen von zwei Lippen (16, 17) des zweiten Elements (1) in zwei länglichen Schlitzen (10, 21) hergestellt wird, die auf zwei gegenüberliegenden parallelen Wänden (4, 5) des ersten Elements (2) gebildet werden.

5. Anordnung nach einem der Ansprüche 1 bis 4, **dadurch gekennzeichnet, dass** es sich um die Anordnung einer Luftführung (1) auf einer Lüfterhaube (2) in einem Kraftfahrzeug handelt.

## Claims

1. Assembly of a first element (2) with a second element (1) produced by assembling an elongate thin lip (16) belonging to the second element (1) in an elongate narrow slit (10) formed by the three sides of an elongate planar plate (6) attached in parallel to a planar wall (4) of the first element (2), **characterized in that** in the direction of the first element, the elongate thin lip (16) has a concave edge (18) and terminates laterally in extended tips (19), and **in that** the elongate slit (10) laterally comprises two zones (12') in which the thickness of the slit is increased, arranged to cooperate with the extended tips (19) of the lip (16), such that insertion of the lip (16) into the slit (10) begins by insertion of the tips (19) into said zones (12') and then continues with the gradual insertion of the rest of the concave edge (18) of the lip (16) as the lip (16) advances.

2. Assembly according to Claim 1, **characterized in that** each zone (12') of increased thickness of the slit is formed by an outwardly horned part (12) of the corners of the plate (6) forming the slit (10).

3. Assembly according to Claim 1 or 2, **characterized in that** the concave edge (18) is curvilinear.

4. Assembly according to any of Claims 1 to 3, **characterized in that** it is produced by assembling two lips (16, 17) of the second element (1) in two elongate slits (10, 21) formed on two parallel opposing walls (4, 5) of the first element (2).

5. Assembly according to any of Claims 1 to 4, **characterized in that** this is the assembly of an air guide (1) on a fan shroud (2) in a motor vehicle.
